# FASCICULE DE BREVET EUROPEEN

(11) **EP 1 587 273 B1**
(45) Date de publication et mention de la délivrance du brevet: **10.10.2007**
(21) Numéro de dépôt: 04290996.0
(22) Date de dépôt: 14.04.2004
(51) Int. Cl.: H04L 29/06

(54) **Procédé d'établissement de sessions sécurisées**
Verfahren der Einrichtung der Sicherheitssitzungen
Process of establishment of security sessions

(43) Date de publication de la demande: 19.10.2005
(73) Titulaire: FRANCE TELECOM, 75015 Paris (FR)
(72) Inventeur: Frisch, Laurent, 75013 Paris (FR); Ondet, Olivier, 75015 Paris (FR)
(74) Mandataire: Hassine, Albert

(56) Documents cités:
- PATENT ABSTRACTS OF JAPAN vol. 2000, no. 25, 12 avril 2001 (2001-04-12) & JP 2001 237820 A (NEC CORP), 31 août 2001 (2001-08-31)
- GUPTA V ET AL: "Experiments in wireless internet security" EXPERIMENTS IN WIRELESS INTERNET SECURITY, vol. 2, 17 mars 2002 (2002-03-17), pages 860-864, XP010585708

## Description

La présente invention concerne les techniques d'échange sécurisé entre unités de communication, et plus particulièrement l'établissement de sessions sécurisées entre ces unités.

Un contexte d'application représentatif est celui où un internaute se connecte, au moyen d'un navigateur web installé sur un terminal client, à un serveur qui héberge un site web sécurisé apte à rendre un service en ligne (banque en ligne, commerce électronique, etc.).

Les sessions sécurisées sont couramment établies au moyens de protocoles connus tels que par exemple:
- SSL ("Secure Sockets Layer") défini par la société Netscape Communications Corporation. Sa version 3 (SSLv3) est décrite dans "The SSL Protocol - Version 3.0", Internet Draft, IETF, novembre 1996. Ce protocole vise à sécuriser les communications entre deux applications, le plus souvent un serveur web et un navigateur. Il est largement répandu et compatible avec la plupart des navigateurs web.
   Dans l'architecture en couches du réseau, le protocole SSL est au-dessus de la couche TCP/IP ("Transmission Control Protocol /Internet Protocol"), et souvent au-dessous d'un protocole de couche supérieure tel que http ("Hypertext Transfer Protocol"). Il permet de garantir l'identité de l'émetteur et du récepteur (authentification), ainsi que la confidentialité et l'intégrité des informations échangées par un protocole de couche supérieure;
- TLS ("Transport Layer Security"), qui est un analogue de SSL normalisé par l'IETF ("The TLS Protocol - Version 1.0", RFC 2246, janvier 1999). La version 1.0 de TLS est sensiblement équivalente à SSLv3;
- WTLS ("Wireless Transport Layer Security"), qui est une adaptation de SSL/TLS à l'univers WAP ("Wireless Application Protocol").

Les protocoles SSL, TLS, et WTLS fonctionnant essentiellement de la même façon, il seront désignés par l'appellation générique de "SSL" dans la suite. Ces protocoles comportent l'usage de systèmes cryptographiques assurant les conditions de sécurité requises.

L'objet fondamental permettant d'avoir confiance en la partie publique d'une clé cryptographique (clé publique) est le certificat. Le standard de certificat utilisé dans de nombreux réseaux dont l'Intemet est X.509, version 3. Une spécification en est fournie par le groupe de travail PKIX de l'IETF ("Internet Engineering Task Force") dans la Request For Comments (RFC) 3280, "Internet X.509 Public Key Infrastructure; Certificate and Certificate Revocation List (CRL) Profile" publiée en avril 2002. Le certificat est un objet comprenant notamment:
- la clé publique à certifier;
- l'identité de son possesseur, par exemple le nom du serveur hébergeant un service en ligne;
- une période de validité;
- éventuellement des extensions, par exemple des informations permettant le contrôle de révocation;
- une signature cryptographique de ces données par la clé privée d'une Autorité de Certification (AC) émettrice du certificat.

Avoir confiance en la clé publique associée à une identité revient à s'assurer de la validité du certificat. Pour PKIX, un certificat est valide à un instant T donné (en termes de confiance):
- soit s'il est explicitement déclaré comme "certificat de confiance". En pratique, les certificats des utilisateurs et des serveurs ne sont jamais déclarés de confiance. On déclare plutôt un nombre réduit de certificats de confiance, consistant en les certificats de certaines AC;
- soit s'il vérifie les conditions suivantes:
   - la signature cryptographique du certificat est mathématiquement valide;
   - l'instant T fait partie de la période de validité du certificat;
   - le certificat n'est pas révoqué à l'instant T;
   - la clé publique de l'AC émettrice est disponible par un certificat de l'AC, et ce certificat de l'AC est lui-même valide à l'instant T.

Un certificat est révoqué à un instant TR de sa période de validité si, à partir de cet instant, l'AC qui l'a émis a un doute sur la compromission de la clé privée associée au certificat. Le but est d'invalider le certificat à partir de TR. En pratique, c'est le cas quand l'utilisateur du certificat déclare la perte ou le vol de sa clé privée associée à la clé publique certifiée, quand l'AC ne souhaite plus certifier la clé de l'utilisateur (par exemple quand un employé quitte une entreprise), etc.

D'après PKIX, un certificat révoqué doit être mis dans une liste de révocation (CRL, "Certificate Revocation List") qui est une liste, signée par une AC, de certificats émis puis révoqués par cette AC. En théorie, une AC ne doit jamais retirer un certificat d'une CRL. Par exemple, si une signature est émise à un instant T avec un certificat révoqué à T, il faut pouvoir contrôler de façon pérenne que le certificat était bien révoqué à T et donc la signature invalide. Cependant, pour des certificats ne servant pas à la non-répudiation (par exemple chiffrement ou authentification), retirer un certificat d'une CRL peut se justifier, en général après son expiration.

Il existe deux moyens courants de contrôler la non-révocation d'un certificat donné:
- l'accès à la CRL. Le vérificateur du certificat télécharge la CRL auprès d'un serveur, vérifie la signature de la CRL puis recherche le certificat à vérifier dans la CRL;
- le contrôle de non-révocation en ligne. Afin d'éviter au vérificateur de télécharger des CRL potentiellement volumineuses, un protocole en ligne a été défini pour effectuer le contrôle sur seulement un ou quelques certificats. Il s'agit du protocole OCSP décrit dans la RFC 2560, "Internet X.509 Public Key Infrastructure; Online Certificate Status Protocol - OCSP", publiée en juin 1999 par l'IETF. Selon ce protocole, le vérificateur du certificat adresse une requête OCSP à un serveur OCSP dépendant de l'AC émettrice, récupère la réponse OCSP signée en provenance de ce serveur, vérifie la signature de la réponse OCSP et analyse cette réponse.

L'utilisation d'OCSP est en ligne. L'utilisation des CRL est soit en ligne, soit hors ligne mais avec mise à jour régulière des CRL. Un certificat peut inclure des moyens de vérifier en ligne sa propre validité. Ces moyens consistent par exemple en l'indication d'un point de distribution de la CRL ou d'une adresse d'un serveur OCSP.

Dans SSL, après une phase d'initialisation ("handshake"), le client et le serveur peuvent échanger des données sur une session SSL. Le cas le plus courant d'utilisation de SSL est celui du protocole https, qui consiste à utiliser le protocole du web (http) sur une session SSL. Au cours du handshake, le serveur s'authentifie auprès du client en utilisant la clé privée associée à son certificat X.509. S'il le souhaite, le serveur peut demander au client de s'authentifier: dans ce cas, il envoie la liste des AC qu'il reconnaît comme AC de confiance. Alors, le client s'authentifie en utilisant la clé privée associée à un certificat accepté par ce serveur, et en transmettant les éventuels certificats intermédiaires pour se rattacher à l'une des AC de confiance.

Un inconvénient majeur en termes de performance est que l'établissement d'une session d'un protocole sécurisé avec authentifications par certificats est long, pénalisant ainsi les utilisateurs de ces protocoles. Du côté du client, ceci résulte en grande partie de la vérification du certificat du serveur.

Cette opération de vérification est longue. Selon les cas, la latence principale a des causes différentes, notamment:
- durée des opérations cryptographiques de vérification. Cette durée est généralement considérée comme négligeable sur un ordinateur personnel (PC), encore qu'elle puisse s'avérer longue selon l'algorithme utilisé. Mais elle est bien plus sensible en environnement contraint (PDA, téléphone mobile);
- durée du contrôle de révocation. Cette durée n'intervient que quand il y a effectivement contrôle de la révocation du certificat du serveur, voire des AC. Si cette opération est amenée à se répandre, elle n'est pas aujourd'hui très utilisée, notamment à cause du coût en performance. Selon le mode de contrôle de révocation utilisé, le coût est différent. Avec l'usage de CRL, il y a la latence entre la requête de CRL et la réponse (en particulier sur des réseaux bas débit et à grande latence, type GSM), la latence liée à la charge du réseau et à la taille potentiellement importante de la CRL, le temps de vérification de la signature de la CRL et le temps de recherche d'un certificat dans la CRL. Si le contrôle de révocation utilise OCSP, il y a la latence entre la requête OCSP et la réponse (généralement plus importante que pour une requête de CRL car le serveur doit signer sa réponse) et le temps de vérification de la signature de la réponse OCSP.

Dans le cas de certains environnements à faible puissance de calcul (terminal mobile, PDA, carte à puce puissante, micro-terminal sans fil tel que montre, appareil photo numérique, ...), une vérification de signature et/ou de certificat, et/ou de CRL et/ou de réponse OCSP peut être trop longue à effectuer pour avoir une utilité pratique.

L'abrégé paru dans Patent Abstracts of Japan et correspondant à la demande de brevet JP 2001 237820 A se rapporte à un système de réécriture de certificats dans un contexte d'authentification, dans lequel plusieurs certificats ayant des dates d'expiration différentes sont stockés dans un terminal qui procède à une sélection d'un certificat valide à l'aide d'une horloge.

Un but de la présente invention est de permettre de gagner du temps du côté utilisateur lors de l'établissement d'une session sécurisée.

L'invention propose ainsi un procédé tel qu'énoncé dans la revendication 1. Des modes de réalisation de ce procédé sont indiqués dans les revendications 2 à 8.

Le gain de temps pour l'utilisateur résulte de la conservation dans un signet ("bookmark") du certificat d'un site sécurisé, ainsi que de l'exécution de la vérification de ce certificat à un instant antérieur à la connexion au site.

Considérons l'exemple élémentaire où un utilisateur veut se connecter à sa banque en ligne. Le certificat de la banque est d'abord récupéré et vérifié, par exemple lors d'une première connexion. La vérification étant jugée valable entre l'instant présent T et un certain instant ultérieur T' (par exemple un mois plus tard), lorsque l'utilisateur enregistre l'URL ("Uniform Resource Locator") du site de sa banque dans un signet, le navigateur enregistre aussi des données validant le certificat de la banque entre les instants T et T', et éventuellement le certificat lui-même. Si l'utilisateur se connecte au serveur avant T', la navigateur se contentera de consulter les données du signet sans avoir à re-vérifier systématiquement le certificat de la banque avant d'autoriser la connexion.

Un autre aspect de l'invention se rapporte à une unité de communication apte à établir des sessions sécurisées avec une unité distante et incorporant des moyens adaptés à la mise en oeuvre du procédé ci-dessus.

Un autre aspect de l'invention se rapporte à un programme d'ordinateur exécutable par un circuit de traitement d'une unité de communication, comprenant des instructions pour établir des sessions sécurisées avec une unité distante conformément au procédé ci-dessus lors d'une exécution du programme par le circuit de traitement.

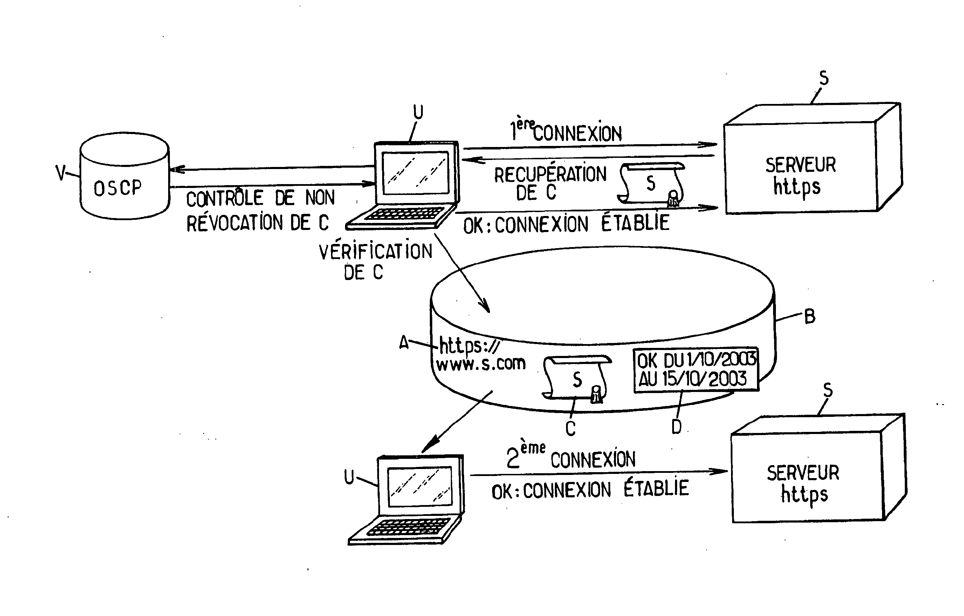

D'autres particularités et avantages de la présente invention apparaîtront dans la description ci-après d'exemples de réalisation non limitatifs, en référence au dessin annexé, dans lequel la figure unique est un diagramme montrant le déroulement d'un procédé selon l'invention.

Le procédé selon l'invention est exécuté dans une unité de communication consistant typiquement en un terminal client. Ce terminal U peut prendre diverses formes: téléphone mobile muni d'un navigateur WAP supportant WTLS, ordinateur personnel fixe ou portable ou assistant numérique personnel (PDA) muni d'un navigateur web supportant SSL/TLS, etc.

Le terminal U a un circuit de traitement (CPU, "central processing unit") capable d'exécuter un logiciel de navigation. Il est en outre équipé d'un programme constituant un enrichissement du navigateur destiné à accélérer l'établissement de sessions sécurisées avec des sites favoris de l'utilisateur. Ce programme, exécutable par le CPU, est écrit en un langage informatique connu de façon à procurer les fonctionnalités décrites ci-après.

Le serveur S auquel l'utilisateur pourra se connecter en utilisant son terminal U héberge un site SSL sécurisé par un certificat C, typiquement un site de banque en ligne, de commerce électronique, de messagerie électronique par le web, etc. Ce sera souvent un serveur auquel l'utilisateur se connecte régulièrement. Le protocole sécurisé employé est par exemple https.

Pour accélérer cette connexion, le terminal opère une vérification anticipée du certificat C du serveur S, dont le résultat est stocké avec le signet B (ou "bookmark")) de S. Selon le navigateur dont est équipé le terminal U, un signet peut consister en un fichier autonome, en un enregistrement dans un gros fichier rassemblant tous les signets, etc.

Dans une première étape, le terminal U obtient le certificat du serveur S. Il enregistre de préférence le certificat obtenu C dans le signet B du site, avec les données d'adressage A du site consistant typiquement en son URL (https://www.s.com dans l'exemple dessiné).

La récupération de ce certificat au terminal client peut s'effectuer lors d'une connexion effective au serveur, comme dans la réalisation illustrée sur la figure. En variante, le terminal U peut récupérer le certificat C par anticipation, indépendamment d'une connexion explicite à S, par exemple au moment d'enregistrer le signet pour S, ou encore hors connexion par un autre moyen tel que l'inscription d'office avant la livraison du terminal, la lecture sur un support de données tel qu'une disquette, un dongle, l'échange avec un autre terminal (par exemple infrarouge), etc.

La récupération du certificat C peut être renouvelée périodiquement, à date fixée, à expiration du certificat précédent, etc

Dans une deuxième étape, le terminal U procède à la vérification du certificat C du serveur S, et si cette vérification est positive, il enregistre des données de validation D dans le signet B, avec l'URL et le certificat du site.

La vérification effectuée inclut le contrôle de révocation. Elle est effective à un instant T, et elle est valable sur une période allant jusqu'à un instant T'. Ceci signifie qu'avec les informations qu'il possède, le terminal client U estime que la vérification qu'il effectue à l'instant T sera encore valable à tous les instants au moins jusqu'à T'. Typiquement, le contrôle de révocation assure de la non-révocation du certificat jusqu'à un certain instant, qui peut être considéré comme l'instant T' par le client. Il peut être opéré à l'aide d'un serveur de vérification de certificats V, par exemple un serveur tenant à jour des CRL ou, comme illustré par la figure, un serveur OCSP.

Les instants T et T' font partie des données de validation D enregistrées dans le signet B. Dans une réalisation typique, l'instant T est celui de la récupération du certificat.

Dans de nombreux cas d'application pratique, U récupère C à la première connexion de l'utilisateur au site S, et il en vérifie immédiatement la validité de T (= instant de récupération) à T'. Si l'utilisateur décide de mettre un signet sur S, le navigateur stocke avec ce signet B les informations C, T, et T'.

Ultérieurement, lorsque le signet B est utilisé pour un nouvel accès au site S, le programme examine les données de validation D de ce signet et les date et heure courantes pour déterminer si la connexion est demandée à un instant compris entre T et T'. Dans l'affirmative, la connexion est établie sans qu'il soit procédé à une nouvelle vérification du certificat pendant le "handshake" SSL, ce qui fait gagner du temps à l'utilisateur.

Si la connexion est demandée à un instant T" postérieur à T', le terminal procède à une vérification du certificat, avec contrôle de révocation par CRL ou OCSP. Une nouvelle vérification est ainsi effectuée à la première connexion au site postérieure à l'instant T'. Si cette vérification confirme la validité du certificat jusqu'à T"', le signet B peut être mis à jour en remplaçant les données de validation T, T' par T", T"'.

Dans une variante de réalisation, une nouvelle vérification du certificat C est effectuée automatiquement par le programme à l'instant T'. La vérification peut aussi être effectuée cycliquement, par exemple une fois par jour en période de faible activité réseau. La première vérification peut encore être effectuée à l'instant de récupération du certificat C, ou à un instant prévu à l'avance.

Il peut être intéressant de prévoir que la re-vérification du certificat C ait lieu automatiquement à un instant antérieur à T' mais relativement proche de T', avec une anticipation programmable par l'utilisateur. Cela permet de paramétrer une re-vérification de C avant la fin de validité de la précédente vérification, et de choisir un instant approprié pour effectuer des connexions réseau, par exemple à une heure de faible trafic.

## Revendications

1. Procédé pour établir des sessions sécurisées avec une unité de communication distante (S), **caractérisé en ce qu'**on obtient un certificat (C) de l'unité distante, on vérifie le certificat, et après une vérification positive pour une période à venir, on enregistre un signet (B) incluant des données (A) d'adressage de l'unité distante et des données (D) de validation du certificat pour ladite période, et **en ce que** l'établissement, à un instant de connexion ultérieur, d'une session sécurisée avec l'unité distante au moyen dudit signet comporte une consultation des données de validation pour vérifier si l'instant de connexion se trouve à l'intérieur de ladite période.

2. Procédé selon la revendication 1, dans lequel le signet enregistré (B) inclut en outre le certificat (C) de l'unité distante (S).

3. Procédé selon la revendication 1 ou 2, dans lequel le certificat (C) est téléchargé lors d'une précédente connexion à l'unité distante (S).

4. Procédé selon la revendication 1 ou 2, dans lequel le certificat (C) est obtenu par anticipation indépendamment d'une connexion à l'unité distante (S).

5. Procédé selon l'une quelconque des revendications précédentes, dans lequel la vérification du certificat (C) est effectuée de façon cyclique.

6. Procédé selon l'une quelconque des revendications précédentes, dans lequel une nouvelle vérification du certificat (C) est effectuée à la fin de ladite période.

7. Procédé selon l'une quelconque des revendications 1 à 5, dans lequel une nouvelle vérification du certificat (C) est effectuée lors de la première connexion à l'unité distante (S) postérieure à la fin de ladite période.

8. Procédé selon l'une quelconque des revendications 1 à 5, dans lequel une nouvelle vérification du certificat (C) est effectuée à un instant programmable avant la fin de ladite période.

9. Unité de communication (U) apte à établir des sessions sécurisées avec une unité de communication distante (S) et incorporant des moyens adaptés à la mise en oeuvre d'un procédé selon l'une quelconque des revendications précédentes.

10. Programme d'ordinateur exécutable par un circuit de traitement d'une unité de communication (U), comprenant des instructions pour établir des sessions sécurisées avec une unité de communication distante (S) conformément à un procédé selon l'une quelconque des revendications 1 à 8 lors d'une exécution du programme par le circuit de traitement.

## Claims

1. Method for establishing secure sessions with a remote communication unit (S), **characterized in that** a certificate (C) of the remote unit is obtained, the certificate is verified, and after a positive verification for a coming period, a bookmark (B) is recorded including the addressing data (A) of the remote unit and data (D) validating the certificate for said period, and **in that** the establishment, at a subsequent connection instant, of a secure session with the remote unit by means of said bookmark comprises a consultation of validation data to verify whether the connection instant is within said period.

2. Method according to Claim 1, in which the recorded bookmark (B) further includes the certificate (C) of the remote unit (S).

3. Method according to Claim 1 or 2, in which the certificate (C) is downloaded during a previous connection to the remote unit (S).

4. Method according to Claim 1 or 2, in which the certificate (C) is obtained in advance independently of a connection to the remote unit (S).

5. Method according to any one of the preceding claims, in which the verification of the certificate (C) is performed cyclically.

6. Method according to any one of the preceding claims, in which a new verification of the certificate (C) is performed at the end of said period.

7. Method according to any one of Claims 1 to 5, in which a new verification of the certificate (C) is performed during the first connection to the remote unit (S) subsequent to the end of said period.

8. Method according to any one of Claims 1 to 5, in which a new verification of the certificate (C) is performed at a programmable instant before the end of said period.

9. Communication unit (U) capable of establishing secure sessions with a remote communication unit (s) and incorporating means adapted to the implementation of a method according to any one of the preceding claims.

10. Computer program executable by a processing circuit of a communication unit (U), comprising instructions for establishing secure sessions with a remote communication unit (S) in accordance with a method according to any ane of Claims 1 to 8 during execution of the program by the processing circuit.

## Patentansprüche

1. Verfahren zum Aufbau gesicherter Dialogsitzungen mit einer fernen Kommunikationseinheit (S),
**dadurch gekennzeichnet, dass** man ein Zertifikat (C) der fernen Einheit erhält, das Zertifikat prüft und nach einer positiven Überprüfung für eine zu kommende Periode ein Signet (B) speichert, das Ansteuerungsdaten (A) der fernen Einheit und Validierungsdaten (D) des Zertifikats für die Periode enthält, und dass der Aufbau, in einem späteren Verbindungszeitpunkt, einer gesicherten Dialogsitzung mit der fernen Einheit mittels des Signets eine Abfrage der Validierungsdaten enthält, um zu prüfen, ob der Verbindungszeitpunkt sich innerhalb der Periode befindet.

2. Verfahren nach Anspruch 1, bei dem das gespeicherte Signet (B) außerdem das Zertifikat (C) der fernen Einheit (S) enthält.

3. Verfahren nach Anspruch 1 oder 2, bei dem das Zertifikat (C) bei einer vorhergehenden Verbindung mit der fernen Einheit (S) heruntergeladen wird.

4. Verfahren nach Anspruch 1 oder 2, bei dem das Zertifikat (C) im Voraus unabhängig von einer Verbindung mit der fernen Einheit (S) erhalten wird.

5. Verfahren nach einem der vorhergehenden Ansprüche, bei dem die Überprüfung des Zertifikats (C) zyklisch durchgeführt wird.

6. Verfahren nach einem der vorhergehenden Ansprüche, bei dem eine neue Überprüfung des Zertifikats (C) am Ende der Periode durchgeführt wird.

7. Verfahren nach einem der Ansprüche 1 bis 5, bei dem eine neue Überprüfung des Zertifikats (C) bei der ersten Verbindung mit der fernen Einheit (S) nach dem Ende der Periode durchgeführt wird.

8. Verfahren nach einem der Ansprüche 1 bis 5, bei dem eine neue Überprüfung des Zertifikats (C) in einem programmierbaren Zeitpunkt vor dem Ende der Periode durchgeführt wird.

9. Kommunikationseinheit (U), die in der Lage ist, gesicherte Dialogsitzungen mit einer fernen Kommunikationseinheit (S) aufzubauen und Mittel zur Anwendung eines Verfahrens nach einem der vorhergehenden Ansprüche enthält.

10. Computerprogramm, das von einer Verarbeitungsschaltung einer Kommunikationseinheit (U) ausgeführt werden kann, das Anweisungen enthält, um gesicherte Dialogsitzungen mit einer fernen Kommunikationseinheit (S) entsprechend einem Verfahren gemäß einem der Ansprüche 1 bis 8 bei einer Ausführung des Programms durch die Verarbeitungsschaltung aufzubauen.
